# EUROPEAN PATENT SPECIFICATION

(11) **EP 3 663 630 B1**
(45) Date of publication and mention of the grant of the patent: **01.11.2023**
(21) Application number: 18000963.1
(22) Date of filing: 12.12.2018
(51) Int. Cl.: F16P 3/06

(54) **DEVICE TO IMPROVE SAFETY AT THE WORKPLACE**
GERÄT ZUR VERBESSERUNG DER SICHERHEIT AM ARBEITSPLATZ
DISPOSITIF POUR AMÉLIORER LA SÉCURITÉ SUR LE LIEU DE TRAVAIL

(30) Priority: 03.12.2018 PL 42802218
(43) Date of publication of application: 10.06.2020
(73) Proprietor: Politechnika Slaska, 44-100 Gliwice (PL)
(72) Inventor: Dobrowolska, Malgorzata, 40-540 Katowice (PL); Szabo, Stanislav, 044 41 Sady Nad Torysou (SK); Gzik, Marek, 44-100 Gliwice (PL); Wodarski, Piotr, 43-190 Mikolow (PL); Jedrasiak, Karol, 44-190 Mikolow (PL); Nawrat, Aleksander, 41-807 Zabrze (PL); Jurkojc, Jacek, 42-677 Szalsza (PL); Cekan, Peter, 08001 Presov (SK)

(56) References cited:
- US-A1- 2005 033 200
- US-A1- 2017 372 184

## Description

The present invention relates to a device for improving safety at a work station.

Despite numerous technological developments: protections of workers available on the market, specialist equipment with the safety and work hygiene objectives, devices, protective clothing and solutions introduced to the work station infrastructure, the statistics on the number of accidents at work available in the world confirm the need to look for more perfect devices protecting a worker against accidents, against cuts or against any other damage to health.

Nowadays there is a systemic approach to safety at work: Dobrowolska M., 2015 Culture of health and safety at work in organizations using flexible 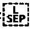 HR solutions in the context of selected psychological variables, Jana Jurkovičová, Zuzana Štefániková, Životné podmienky a zdravie, Urad verejného zdravotnictva Slovenskej republiky Slovenská spolocnosf hygienikov SLS Ustav hygieny Lekárskej fakulty UK Bratislava, s. 381-389. Organisations introduce various procedures in the domain of the work safety policy including systems of trainings, psychosocial creation of required attitudes towards safety, as well as specialist tools used for diagnosing health and safety at work. Organisations use multifarious labels and protection measures in the work station infrastructure in order to create safe areas. The analysis of the causes of accidents occurring at work indicate that the human factor is the most unreliable: recklessness, tiredness, disregard for regulations, and the like. Therefore devices for improving safety at a work station should protect a person against an accident by automatic means regardless of the level of cognitive processes, of psychophysical efficiency and of the approach towards safety etc., which is guaranteed by the proposed device. The invention proposes a solution to the problem of improving safety at a work station.

The present invention relates to a device for improving safety at a work station, which is a gyroscopic and magnetometric device for improving safety at a work station where there are dangerous objects such as: movable knives, hot surfaces, cutting objects and the like. Improving safety is achieved by restriction of a limb mobility and/or by hindering a limb movement and/or by moving a limb in an expected direction, while on the said limb there is a device fitted, in case of a worker or his/her part of the body approaching a place which could cause his/her damage to health. Restriction of the mobility of a limb on which a device is placed is achieved by starting gyroscopes fitted in a said device as well as by magnetic field interaction emitted from a different device onto components of the invented device.

A similar solution is known from the invention called "Gyroscopic - assisted device to control balance" described in patent US 20140260714A1, in which systems of spinning gyroscopes were used to stabilize the posture and prevent the fall. However, in this solution magnetometer detectors, accelerometers and gyroscopic sensors of rotation were not used. The system of spinning gyroscopes is different, there is a different location of components and there is lack of ferromagnetic components.

Other solutions ensuring security at a work station are also known, e.g. devices which contain shields of hazardous components "Safety shield for circular saws" US1397606 and devices which contain spinning components " Safety device for saws" US2562396. Protectors of parts of the body are also popular, e.g. the ones used in the device called "Foot safety guard" US4991318. There are also systems monitoring a worker's movement at a work station with the division into particular limbs "Motion monitoring and analysis system" US20070250286A1. The present solutions focus mainly on protecting hazardous components by using various types of shields of movable components or body part protectors. There are also devices dedicated to the analysis of movement of a person in a hazardous zone.
**Another solution in the state of the art is** US2017/372184A1**. It discloses device including sensors, gyroscopes, magnetometer and IMU sensor. This document contains general information on what the IMU sensor comprises, including information on the accelerometer 1916, the gyroscope 1920 and the magnetometer 1918. Paragraph [0238] contains information on how this sensor is used to measure the luggage position and orientation.**

There are no devices whose operating principle is based on restriction of degrees of freedom of limb movement by momentary immobilization and/or by hindering a limb movement and/or by moving a limb in an expected direction, for example pushing a limb from the place which constitutes hazard. The proposed solution of a device allows to improve work safety at a work station which contains hazardous components. It also allows to shorten the time of accomplishing a task, as a person improves his/her focus on a task and he/she does not concentrate solely on the aspect of avoiding hazardous places. Thanks to the device optimisation of time and expenses of producing devices is achieved and expenses are minimised.

The present invention relates to a device improving safety at a work station. The said device is placed on any limb and a degree of freedom of limb movement can be restricted by momentary immobilization and/or by hindering a limb movement and/or by moving a limb in an expected direction. Placing the device takes place by fastening it on any band or sticking it to clothes or other parts of clothing. The device allows to detect a hazardous place due to the fact that it contains a sensor accelerometer, a magnetometer and a gyroscopic rotation sensor. The device locates its position in space, and a magnetometer allows to specify the distance from hazardous metal objects. A gyroscopic and magnetometric device for improving safety at a work station consists of a case and the following sensors placed therein: a gyroscopic rotation sensor, a magnetometer and an accelerometer as well as active components in the form of three gyroscopes placed in three reciprocally perpendicular axes, a driver and a power battery. The device case comprises metal components made of ferromagnetic material. The proposed solution allows a simultaneous measurement of turns, of repositions and of the magnetic field strength which permeats the device. On the basis of the information coming from sensors comprised in the device it is possible to estimate approaching of the device and the limp on which it is placed to hazardous places at a work station. In case of detecting a movement towards a hazardous place the device starts gyroscopes which hinder a limb movement in a hazardous direction. Additionally, electromagnets switched on at a work station push the device and a limb away from a hazardous zone.

The proposed solution is universal and its aim is to improve safety at a work station and protecting limbs against an unwanted injury.

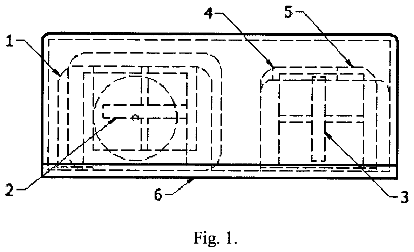

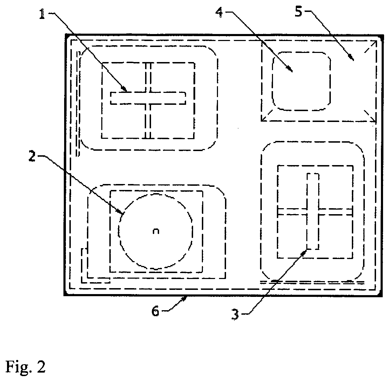

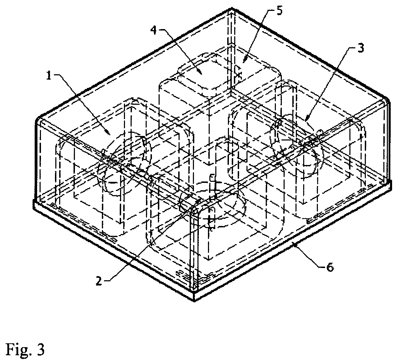

The invention is presented in the examples of realization in the drawings , in which fig. 1 shows the view of the device from the front, fig.2 shows the view of the device from the top, fig.3 shows the axonometric view, and fig.4 shows the exemplary place of fitting the device on an upper limb.

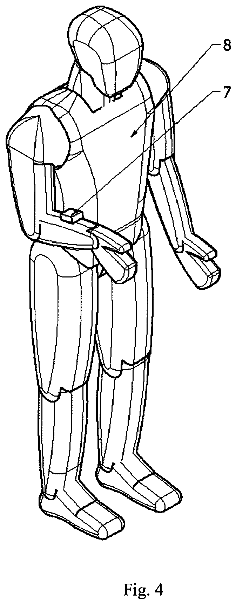

The proposed solution according to drawings 1,2 and 3 consists of three gyroscopes 1, 2, 3 placed in three reciprocally perpendicular axes - a sagittal one, a transverse one and a vertical one. Gyroscopes 1,2 and 3 sit in cases, which enable free spinning of gyroscopes. Gyroscopes 1,2, and 3 are connected to a control unit by a wired system. The device comprises an IMU sensor (inertial measurement unit) 4: a magnetometer , a gyroscopic rotation sensor and an accelerometer, which is placed on the control unit of the device 5. The IMU sensor 4 is connected with the driving part 5 by a wired system. The driving part 5 has a microprocessor control module and an incorporated power source. The wired system between the control unit 4 and gyroscopes 1,2 and 3 enable power supply for gyroscopes and steering the rotation speed of the gyroscopes. The wired system between the driving part 5 and the IMU sensor enables power supply for the sensor. Thanks to an implemented magistral line it is possible to read digital values of the measured paramteres: the acceleration linear acceleration and the rotation speed as well as the magnetic field strength. All components of the device are placed in a case 6, which comprises components made of ferromagnetic materials. The above mentioned components may constitute a part of the case, or they can be integrated with its inner part. The longest dimension of these elements do not exceed the smallest dimension of the side of the case. The device is placed on any limb, for example in fig.4 the device 7 is placed on the upper limb of the dummy 8.

The construction of the device allows its location on any limb and its function enables momentary immobilisation in case of a hazardous situation occurring or in case of a hazardous location of the protected limb.

## Claims

1. A device for improving safety at a work station, comprising a case and gyroscopes and the following sensors placed therein: an accelerometer, a magnetometer and a gyroscopic rotation sensor, **characterized by** the fact that it contains at least three rotary gyroscopic components (1,2,3), gyroscopes (1,2,3) sitting in cases which separate them from the other components inside the case (6) and which enable their free spinning; the device comprises at least one IMU sensor (4): a magnetometer, a gyroscopic rotation sensor and an accelerometer , which is placed on the control unit (5); the control unit (5) has a microprocessor control module and an incorporated power source, all components of the device are placed in the case (6), which comprises components made of ferromagnetic materials, the whole device (7) is adapted for placing on any limb (8).

2. The device of claim 1 **characterised by** the fact that the location of the spinning gyroscopes (1,2,3) is in separate cases inside the main case of the device (6).

3. The device of claim 1 **characterised by** the fact that the axes of the spinning gyroscopes (1,2,3) are placed in three perpendicular directions.

4. The device of claim 1 **characterised by** the fact that the gyroscopes (1,2,3) are connected with the control unit (5) by the wired system.

5. The device of claim 1 **characterised by** the fact that it has the IMU sensor (4): a magnetometer, a gyroscopic rotation sensor and an accelerometer to specify the location of an limb in space. The IMU sensor (4) is connected with the control unit by the wired system.

6. The device of claim 1 **characterised by** the fact that the microprocessor control (5) with an integrated battery is used to steer the gyroscopes (1,2,3). Power supply and steering are done by the wired system.

7. The device of claim 1 **characterised by** the fact that it has a magnetometer for localisation of approaching to hazardous metal components at a work station.

8. The device of claim 1 **characterised by** the fact that the case comprises components made of ferromagnetic materials, the above mentioned components may constitute a part of the case, or they can be integrated with its inner part, the longest dimension of these elements do not exceed the smallest dimension of the side of the case

## Patentansprüche

1. Die Vorrichtung zur Verbesserung der Sicherheit am Arbeitsplatz, die ein Gehäuse mit Gyroskopen und Sensoren im Inneren umfasst: einen Beschleunigungsmesser, einen gyroskopischen Drehzahlsensor und ein Magnetometer, **dadurch gekennzeichnet, dass** sie mindestens drei drehbare gyroskopische Elemente enthält (1, 2, 3), die Gyroskope (1, 2, 3) sind in Gehäusen eingebettet, die sie von den anderen Bauteilen im Inneren des Gehäuses (6) trennen und die es ihnen ermöglichen, sich frei zu drehen; die Vorrichtung enthält mindestens einen IMU-Sensor (4): einen Magnetometer, einen gyroskopischen Drehzahlsensor und einen Beschleunigungssensor, der sich auf dem Bedienelement (5) der Vorrichtung befindet; das Bedienelement der Vorrichtung (5) verfügt über ein Mikroprozessor-Steuermodul und eine integrierte Stromversorgung für das Gerät, alle Komponenten der Vorrichtung befinden sich in einem Gehäuse (6), das ferromagnetische Materialkomponenten enthält, die gesamte Vorrichtung (7) kann an jeder beliebigen Gliedmaße (8) angebracht werden

2. Die Vorrichtung nach Anspruch 1, **dadurch gekennzeichnet, dass** die Lage der drehenden Gyroskope (1, 2, 3) sich in getrennten Gehäusen innerhalb des Hauptgehäuses der Vorrichtung (6) befindet.

3. Die Vorrichtung nach Anspruch 1, **dadurch gekennzeichnet, dass** die Achsen der drehenden Gyroskope (1, 2, 3) in drei gegenseitig senkrechten Richtungen zueinander ausgerichtet sind.

4. Die Vorrichtung nach Anspruch 1, **dadurch gekennzeichnet, dass** die Gyroskope (1, 2, 3) mit dem Bedienelement der Vorrichtung (5) mit einer Leitung verbunden sind.

5. Die Vorrichtung nach Anspruch 1, **dadurch gekennzeichnet, dass** sie über einen IMU-Sensor (4) verfügt: ein Magnetometer, einen gyroskopischen Drehzahlsensor und einen Beschleunigungssensor zur Lokalisierung der Gliedmaße im Raum. Der IMU-Sensor (4) ist mit dem Bedienelement (5) verdrahtet.

6. Die Vorrichtung nach Anspruch 1, **dadurch gekennzeichnet, dass** zur Steuerung von Giroskopen (1, 2, 3) ein Mikroprozessor-Controller (5) mit integrierter Batterie verwendet wird. Die Stromversorgung und Steuerung erfolgt über eine Leitung,

7. Die Vorrichtung nach Anspruch 1, **dadurch gekennzeichnet, dass** sie über ein Magnetometer zur Bestimmung von Annäherung zu metallischen gefährlichen Elementen am Arbeitsplatz verfügt.

8. Die Vorrichtung nach Anspruch 1, **dadurch gekennzeichnet, dass** das Gehäuse Elemente aus ferromagnetischen Materialien aufweist, diese Elemente entweder Teil des Gehäuses sind oder in der Mitte des Gehäuses eingebettet sind, die längste Abmessung dieser Elemente die Länge der kleinsten Abmessung der Seite des Gehäuses nicht überschreitet.

## Revendications

1. Dispositif pour l'amélioration de la sécurité sur le poste de travail comprenant le boîtier avec les gyroscopes et les capteurs situés à l'intérieur : l'accéléromètre, le capteur de rotation gyroscopique et le magnétomètre, **caractérisé en ce qu'il** comprend au moins trois éléments rotatifs gyroscopiques (1, 2, 3), lesdits gyroscopes (1, 2, 3) sont placés dans les boîtiers qui les séparent des autres éléments à l'intérieur du boîtier (6) et qui leur permettent de tourner librement ; ledit dispositif comprend au moins une centrale à inertie (4) : le magnétomètre, le capteur de rotation gyroscopique et l'accéléromètre, qui est situé sur l'élément de commande du dispositif (5) ; ledit élément de commande du dispositif (5) possède l'unité de commande à microprocesseur et l'alimentation du dispositif intégrée, tous les éléments du dispositif sont situés dans le boîtier (6) qui comprend les éléments des matériaux ferromagnétiques, la totalité du dispositif (7) est adaptée à être placée sur n'importe quel membre du corps (8).

2. Dispositif selon la revendication 1, **caractérisé en ce que** les gyroscopes en rotation (1, 2, 3) sont localisés dans les boîtiers séparés à l'intérieur du boîtier principal du dispositif (6).

3. Dispositif selon la revendication 1, **caractérisé en ce que** les axes des gyroscopes en rotation (1, 2, 3) sont orientés les uns par rapport aux autres dans trois directions mutuellement perpendiculaires.

4. Dispositif selon la revendication 1, **caractérisé en ce que** les gyroscopes (1, 2, 3) sont connectés à l'élément de commande du dispositif (5) de façon filaire.

5. Dispositif selon la revendication 1, **caractérisé en ce qu'**il possède la centrale à inertie (4) : le magnétomètre, le capteur de rotation gyroscopique et l'accéléromètre pour déterminer la position du membre du corps dans l'espace. La centrale à inertie (4) est connectée à l'élément de commande (5) de façon filaire.

6. Dispositif selon la revendication 1, **caractérisé en ce que** pour commander les gyroscopes (1, 2, 3), il utilise l'unité de commande à microprocesseur (5) avec la batterie intégrée. L'alimentation et la commande se passent de façon filaire.

7. Dispositif selon la revendication 1, **caractérisé en ce qu'**il possède le magnétomètre pour la localisation de rapprochement des éléments métalliques dangereux sur le poste de travail.

8. Dispositif selon la revendication 1, **caractérisé en ce que** le boîtier possède les éléments fabriqués en matériaux ferromagnétiques, lesdits éléments font une partie dudit boîtier ou y sont incorporés, la dimension la plus longue desdits éléments ne dépasse pas la longueur de la dimension la plus petite du côté dudit boîtier.
